# FASCICULE DE BREVET EUROPEEN

(11) **EP 3 545 618 B1**
(45) Date de publication et mention de la délivrance du brevet: **12.07.2023**
(21) Numéro de dépôt: 17816917.3
(22) Date de dépôt: 23.11.2017
(51) Int. Cl.: H02S 10/40, H02J 7/35

(54) **DISPOSITIF AUTONOME ET MOBILE DE PRODUCTION, DE STOCKAGE ET DE DISTRIBUTION D'ÉNERGIE ÉLECTRIQUE**
AUTONOME UND BEWEGLICHE VORRICHTUNG ZUM ERZEUGEN, SPEICHERN UND VERTEILEN ELEKTRISCHER ENERGIE
AUTONOMOUS AND MOVABLE DEVICE FOR GENERATING, STORING AND DISTRIBUTING ELECTRICAL POWER

(30) Priorité: 24.11.2016 FR 1661453
(43) Date de publication de la demande: 02.10.2019
(73) Titulaire: Solarplexus, 97470 Saint Benoit (FR)
(72) Inventeur: ORRIOLS, Alain, 97400 Saint-Denis (FR); NAMY, Nicolas, 97400 Saint-Denis (FR)
(74) Mandataire: Cabinet Bleger-Rhein-Poupon
(86) Numéro de dépôt international: PCT/FR2017/053230
(87) Numéro de publication internationale: WO 2018/096281

(56) Documents cités:
- EP-A1- 2 822 178
- WO-A2-2014/089567
- FR-A1- 3 011 699
- GB-A- 2 523 207
- JP-A- 2015 144 555
- US-A1- 2004 124 711

## Description

La présente invention concerne le domaine des systèmes autonomes de production et de stockage d'électricité.

L'invention concerne plus particulièrement un dispositif à la fois mobile et compact, et qui est apte à permettre, d'une part, une production d'électricité à partir d'énergie solaire, et, d'autre part, un stockage de cette électricité produite dans des batteries de stockage internes ainsi que dans des batteries portables externes, ces dernières étant spécialement conçues pour être les seuls appareils susceptibles de se connecter audit dispositif.

Tout particulièrement, il a été mis au point un dispositif qui permet une gestion à la fois intelligente et autonome de la production et du stockage d'électricité, afin que celle-ci soit disponible et utilisable dans des régions où l'accès à l'électricité est difficile.

En outre, ce dispositif peut également permettre, notamment, l'accès à un réseau de télécommunication électronique de type internet pour un grand nombre d'utilisateurs, l'accès à un réfrigérateur ainsi qu'une gestion, une surveillance et un contrôle de son fonctionnement à distance.

Traditionnellement, il est connu, dans l'état de la technique, des systèmes autonomes permettant d'avoir accès à de l'électricité, notamment au moyen de systèmes thermiques mobiles, tels que des moteurs ou des turbines et permettant de se connecter à des réseaux électriques existants afin de pallier rapidement le manque de moyens de production électrique.

Ces dispositifs proposent donc un moyen de production carboné d'électricité mais nécessitent, cependant, des réseaux électriques ainsi que des infrastructures existantes pour la distribution de cette électricité, ceux-ci faisant justement défaut dans certaines régions des pays en développement.

Il est aussi connu de l'état de la technique des systèmes dits « micro-réseaux » qui consistent à construire une centrale électrique à partir d'énergie photovoltaïque ou éolienne et de mettre en place un réseau électrique simplifié pour connecter les habitations du micro-réseau à la centrale.

Ce dispositif permet effectivement de répondre au besoin d'électricité dans des zones isolées mais, d'un autre côté, il s'avère coûteux, non mobile, et long à installer. En outre, un tel dispositif soulève de nombreux défis quant aux infrastructures à mettre en place tout en maintenant un niveau de sécurité nécessaire.

Les systèmes permettant une autoconsommation en électricité, autrement dit la production et la consommation de sa propre électricité (via des panneaux solaires sur le toit de l'habitation, par exemple) commencent également à se démocratiser et peuvent être une réponse dans les zones isolées.

Néanmoins ces systèmes sont difficilement applicables dans les zones en développement au vu des coûts très importants de ces installations, des toitures non adaptées, de la maintenance et de l'exploitation nécessitant du support spécialisé localement.

Ainsi, les solutions qui sont proposées actuellement dans l'état de la technique ne sont pas adaptées aux zones non desservies en électricité de pays en développement.

On connaît également, dans l'état de la technique, la demande de brevet américaine US 2004/124711, qui a pour objet un système mobile de production d'énergie comportant un premier moyen de production d'énergie, couplé à un logement mobile, dans lequel on trouve également un second moyen de production d'énergie, différent du premier, par exemple des panneaux photovoltaïques et un moyen de production à partir d'énergie éolienne. Une interface est également prévue pour la connexion d'une large variété d'appareils pouvant être rechargés.

Toutefois, le système proposé ici présente plusieurs inconvénients, et notamment ledit système ne permet pas de garantir, aux utilisateurs venant recharger leur(s) appareil(s), une disponibilité de l'énergie électrique. Il est donc tout à fait possible qu'un utilisateur se déplace jusqu'au système de production d'énergie, attende un temps plus ou moins long pour pouvoir brancher son appareil, en fonction du nombre d'utilisateurs déjà présents ou en attente sur site, pour finalement se voir refuser le chargement de son ou de ses appareils, pour cause de non disponibilité d'énergie électrique.

Le document de brevet FR 3 011 699 décrit une installation apte à être électriquement autonome, et générant de l'énergie à partir d'une source naturelle. L'installation comporte en outre un bâtiment « en dur », des moyens de stockage d'énergie ainsi qu'une borne externe de distribution d'électricité, à laquelle tout type d'appareil électrique peut être connecté, tels que des chargeurs de téléphone, des ordinateurs, etc.

Un des inconvénients de cette installation est qu'elle est non mobile, nécessitant par conséquent des opérations lourdes de construction d'un bâtiment, tout comme d'autres dispositifs de l'état de la technique déjà évoqués.

En outre, et comme pour la demande de brevet américain US 2004/124711 susmentionnée, étant donné que le bâtiment constitue l'élément à alimenter prioritairement en électricité, la borne externe ne reçoit qu'un surplus d'énergie éventuellement disponible. Ainsi, là encore, un utilisateur venant recharger un appareil portatif n'a aucune garantie de disponibilité d'énergie et peut potentiellement se déplacer et/ou attendre pour, finalement, être dans l'impossibilité de recharger de son appareil.

La présente invention se veut à même de répondre aux différents inconvénients de l'existant en proposant un dispositif compact, mobile, pouvant être livré et installé rapidement et aisément dans une région dépourvue d'approvisionnement en électricité, par exemple. Ce dispositif permet une production d'électricité et donc un accès notamment à de la lumière et/ou à un système de réfrigération et/ou à un réseau de télécommunication électronique pour les populations vivant à proximité de ce dispositif.

De surcroît, les inventeurs ont réussi à mettre au point un dispositif qui, en plus de présenter les avantages mentionnés précédemment, gère de manière autonome et intelligente le stockage et la distribution de cette énergie électrique en fonction, notamment, de la production et des besoins des différents appareils pouvant être reliés ou connectés au dispositif, ou faisant le cas échéant partie intégrante du dispositif en question.

A ces effets, plus particulièrement, la présente invention est relative à un dispositif autonome de production, de stockage et de distribution d'énergie électrique comprenant des moyens de production d'énergie électrique, de préférence des panneaux photovoltaïques, reposant sur au moins un élément support, par exemple un conteneur maritime standardisé, ce dernier renfermant des moyens de stockage interne de l'énergie électrique produite par lesdits moyens de production, ledit élément support renfermant également des moyens de transformation des signaux issus des moyens de production en des signaux aptes à alimenter des moyens de stockage d'énergie, au moins un connecteur électrique de raccordement de dispositifs externes de stockage d'énergie, ledit élément support intégrant également un système de pilotage comprenant des moyens de gestion du stockage et de la distribution de l'énergie produite par lesdits moyens de production reliés à des capteurs de mesure de paramètres de fonctionnement équipant une pluralité d'éléments du dispositif, et des moyens de télécommunication électroniques.

Dans le dispositif autonome de production, de stockage et de distribution d'énergie électrique, lesdits dispositifs externes de stockage d'énergie sont des batteries mobiles faisant partie intégrante du dispositif et comportent chacune un identifiant reconnu par un moyen d'identification que comporte ledit élément support, ledit moyen d'identification étant connecté au système de pilotage qui autorise ou non l'alimentation de ladite batterie mobile, et comportant des moyens d'affichage, lesdites batteries mobiles faisant partie intégrante du dispositif étant les seuls appareils susceptibles d'être rechargés par ledit au moins un connecteur électrique que comporte ledit dispositif.

Préférentiellement, chacune des batteries mobiles faisant partie intégrante du dispositif comporte des moyens de raccordement spécifiques audit au moins un connecteur électrique, lesdites batteries mobiles étant spécialement conçues pour être les seuls appareils susceptibles de se connecter audit au moins un connecteur électrique que comporte le dispositif.

Avantageusement, chacun des connecteurs électriques est équipé d'au moins un détrompeur empêchant toute connexion d'appareils électriques autres que lesdites batteries mobiles faisant partie intégrante du dispositif.

Préférentiellement, le système de pilotage comprend au moins un serveur contrôlant, d'une part, une pluralité de microcontrôleurs commandant des moyens d'ouverture/fermeture, de type relais, au moins des lignes électriques associées à chaque connecteur électrique et, d'autre part, au moins un régulateur de charge et de décharge pour les moyens de stockage interne.

En ce qui concerne les moyens de transformation des signaux, ceux-ci peuvent avantageusement consister en au moins un onduleur raccordé en aval desdits moyens de production et en amont des connecteurs électriques et au moins un régulateur de charge raccordé entre lesdits onduleurs des moyens de production et les moyens de stockage interne. En outre, selon l'invention, chaque régulateur de charge est de préférence associé à un onduleur.

Dans un exemple de réalisation avantageux, sur chaque ligne électrique, en aval des moyens de transformation des signaux, au moins un compteur est raccordé en amont d'un relais, un disjoncteur étant connecté entre eux.

De manière intéressante en termes de praticité de fonctionnement, ledit élément support renferme également des lignes électriques alimentant au moins un réfrigérateur et/ou au moins un moyen de ventilation et/ou au moins un éclairage.

Les moyens de télécommunication électroniques du dispositif de l'invention peuvent également comporter au moins un serveur WEB, un routeur WIFI et un routeur internet.

Selon une possibilité, le système de pilotage et ses moyens de gestion du stockage et de la distribution d'énergie comprennent en outre des capteurs de tension, de courant, et d'énergie.

Dans un mode de réalisation particulier, le dispositif de l'invention comporte, en tant qu'éléments supports, deux conteneurs sur lesquels est fixée une structure de maintien et de fixation d'une pluralité de panneaux photovoltaïques, lesdits connecteurs électriques étant positionnés sur les faces extérieures d'au moins l'un des deux conteneurs.

Ledit élément support comporte des moyens d'identification d'au moins un appareil externe, consistant en des dispositifs de stockage externe d'énergie, de type batteries mobiles, apte à être branchés à un connecteur électrique et comportant un identifiant, ledit moyen d'identification étant connecté au système de pilotage qui autorise ou non l'alimentation dudit appareil, lesdits moyens d'identification comportant des moyens d'affichage.

Les connecteurs électriques comportent avantageusement des moyens de repérage de type LED gérés par le système de pilotage du dispositif.

La présente invention est également relative à un procédé de gestion de l'énergie produite par un dispositif autonome de production, de stockage et de distribution d'énergie électrique et comportant au moins les étapes suivantes :
- Etablissement d'une première valeur seuil S1 de niveau d'énergie disponible dans les moyens de stockage interne nécessaire au fonctionnement du dispositif ;
- Etablissement d'une deuxième valeur S2 de niveau d'énergie disponible dans les moyens de stockage interne de sorte que S2 > S1 ;
- En cas de passage sous ladite première valeur seuil S1, déconnexion des moyens de télécommunication électronique pendant une première période d1 de durée prédéterminée, puis contrôle en boucle du niveau d'énergie disponible dans les moyens de stockage interne à l'issue de ladite première période d1, et reconnexion des moyens de télécommunication électroniques si ledit niveau est supérieur à la deuxième valeur S2 ;
- Si ledit niveau d'énergie disponible est toujours inférieur à la deuxième valeur S2, détection du nombre de connecteurs électriques en phase active d'alimentation d'une charge, et calcul de leur durée d'alimentation tₐ ;
- Déconnexion des n₁ connecteurs électriques présentant les durées d'alimentation tₐ les plus élevées pendant une seconde période de durée prédéterminée d2, puis contrôle en boucle du niveau d'énergie disponible dans les moyens de stockage interne à l'issue de ladite seconde période d2 et, si la valeur S2 n'est pas atteinte, reprise de la phase de déconnexion en incrémentant de n₂ le nombre de connecteurs électriques déconnectés, tout en gardant les moyens de télécommunication électroniques déconnectés ;

A titre de remarque, n₁ et n₂ peuvent être identiques ou différents.
- Reconnexion des connecteurs électriques déconnectés et des moyens de télécommunication électroniques dès que ledit niveau d'énergie disponible dans les moyens de stockage interne est supérieur ou égale à la deuxième valeur S2 ;
- Si aucun ou plus aucun connecteur électrique n'est en phase active d'alimentation d'une charge, contrôle de la ligne d'alimentation du réfrigérateur et déconnexion de ladite ligne si le réfrigérateur est alimenté, pendant une troisième période de durée prédéterminée d3, puis contrôle en boucle du niveau d'énergie disponible dans les moyens de stockage interne à l'issue de ladite troisième période d3, et reconnexion du réfrigérateur, de l'ensemble des connecteurs électriques et des moyens de télécommunication électroniques dès que ledit niveau est supérieur à la deuxième valeur S2 ;
- Si ledit niveau d'énergie disponible est toujours inférieur à la deuxième valeur S2, envoi d'une alerte d'insuffisance d'énergie et déconnexion des capteurs à l'exception de capteurs d'énergie des moyens de stockage interne, puis contrôle en boucle du niveau d'énergie disponible dans lesdits moyens de stockage interne et reconnexion des éléments déconnectés dès que ledit niveau d'énergie est supérieur à la deuxième valeur S2.
- En cas de détection d'une énergie nulle dans les moyens de stockage interne et si la production photovoltaïque est nulle, le serveur et les différents organes du dispositif redémarrent dès qu'ils se trouvent réalimentés en énergie.

Les valeurs S1 et S2 sont préférentiellement variables selon des tranches horaires définies dans une période temporelle correspondant à une journée.

Dans un exemple avantageux :
- La première valeur de seuil S1 est comprise entre 1 et 8 kWh ;
- La seconde valeur S2 est supérieure ou égale à S1 + 1 kWh et comprise entre 2 et 10 kWh ;
- La première durée prédéterminée d1 est comprise entre 2 min et 30 min ;
- La seconde durée prédéterminée d2 est comprise entre 2 min et 30 min ;
- La troisième durée prédéterminée d3 est comprise entre 2 min et 30 min.

Dans le procédé de gestion de l'énergie, pour le chargement des moyens de stockage externe d'énergie, on peut préférentiellement mettre en oeuvre au moins les étapes suivantes :
- Lecture par les moyens d'identification de l'identifiant d'un dispositif de stockage externe d'énergie et relève de l'instant t1 et de la date T de lecture ;
- Contrôle par le système de pilotage de la dernière date M de chargement dudit dispositif de stockage externe d'énergie ;
- Calcul de la durée D = T - M et comparaison de D avec une durée prédéterminée L imposée entre deux chargements ;
- Refus de chargement si D est différent de L, et envoi, par le système de pilotage, et visualisation sur les moyens d'affichage d'un message indiquant la prochaine date autorisée ;
- Sinon, le système de pilotage réalise une mémorisation du moment de l'identification, puis l'affectation et la visualisation du connecteur électrique alloué par activation des moyens de repérage dudit connecteur.

Plus préférentiellement encore, dans le procédé de gestion de l'énergie décrit ci-dessus, on met en oeuvre encore les étapes suivantes :
- Identification d'un compteur correspondant au connecteur électrique affecté et mémorisation de la valeur v1 de comptage du courant de charge et de l'instant t1 ;
- Contrôle en boucle pendant une durée prédéterminée comprise entre 1 min et 4 min de la valeur de comptage du courant de charge v2, et comparaison avec v1 ;
- Si v2 > v1, mémorisation de l'instant t2 et de la date du jour comme dernière date M de chargement dudit dispositif de stockage externe d'énergie, sinon arrêt de l'alimentation du connecteur électrique sans mémorisation de date de chargement ;
- Contrôle en boucle de la valeur du courant de charge, et dès qu'il diminue, arrêt de l'alimentation du connecteur électrique et mémorisation de l'instant t3 d'arrêt ;
- Si le courant de charge ne diminue pas après une période de durée prédéterminée débutant à l'instant t2, arrêt de l'alimentation du connecteur électrique, et mémorisation de l'instant t3 d'arrêt.

Par ailleurs, selon l'invention, les dates et instants sont mémorisés par le système de pilotage et envoyés via les moyens de télécommunication électroniques.

L'invention concerne enfin également un procédé de gestion à distance d'au moins un dispositif ainsi qu'explicité auparavant, voire de plusieurs dispositifs, et fonctionnant selon un procédé de gestion de chaque dispositif tel que décrit ci-dessus, de sorte que le(s) dispositif(s) soi(en)t relié(s) via les moyens de télécommunication électroniques à un poste central auquel sont envoyés les paramètres de fonctionnement ainsi que les dates et instants mémorisés par le système de pilotage et à partir duquel les valeurs des paramètres de fonctionnement du dispositif peuvent être re-paramétrées.

La présente invention comporte de nombreux avantages.

D'une part le dispositif de l'invention permet de faciliter l'accès à l'énergie électrique pour des populations vivant dans des zones non connectées, par exemple dans les pays en développement. Par conséquent, l'accès à la lumière, à un système de réfrigération ainsi qu'à des moyens de télécommunication électroniques est également facilité.

D'autre part, le stockage et la distribution de cette énergie électrique sont gérés de manière autonome et intelligente par un système intégré au dispositif. Ainsi, lorsque la production d'électricité est supérieure aux besoins, le surplus d'énergie peut être stocké dans des moyens de stockage adaptés et est restitué lorsque la consommation est supérieure à la production.

En outre, le transport et le montage du dispositif, qui se veut compact, peuvent être réalisés rapidement et aisément, les éléments supports des moyens de production d'énergie électrique consistant en un ou plusieurs conteneur(s) standardisés pouvant transporter eux-mêmes les éléments qui composent le dispositif, le matériel nécessaire à son montage ainsi que les batteries externes et les kits d'éclairage destinés aux populations locales.

Ces conteneurs obéissent aux dimensions standards normalisées et sont donc des unités de transport intermodal facilement transportables.

Pour le montage et éventuellement le démontage du présent dispositif, aucune opération lourde de construction n'est requise, pas plus qu'un raccord à un réseau de distribution d'eau et/ou à un réseau électrique.

D'autres caractéristiques et avantages de l'invention ressortiront de la description détaillée qui va suivre des modes de réalisation non limitatifs de l'invention, en référence aux figures annexées dans lesquelles :
- La figure 1 est une représentation schématisée, en perspective, d'un mode de réalisation particulier du dispositif selon l'invention ;
- La figure 2 est une représentation schématisée, vue de dessus, d'un conteneur servant de support au moyen de production d'électricité, et des éléments pouvant être contenus à l'intérieur dudit conteneur ;
- La figure 3A représente une vue schématique de côté d'un mode de réalisation particulier d'un élément de l'invention, illustrant une partie d'une structure support de panneaux photovoltaïques en tant que moyen de production d'électricité, ladite structure étant fixée sur un conteneur et la figure 3B représente, de manière agrandie, un détail de cette structure support, à savoir une patte de fixation permettant la fixation de ladite structure support sur le conteneur.
- La figure 4 représente une vue schématique et en perspective de la structure support de panneaux photovoltaïques.

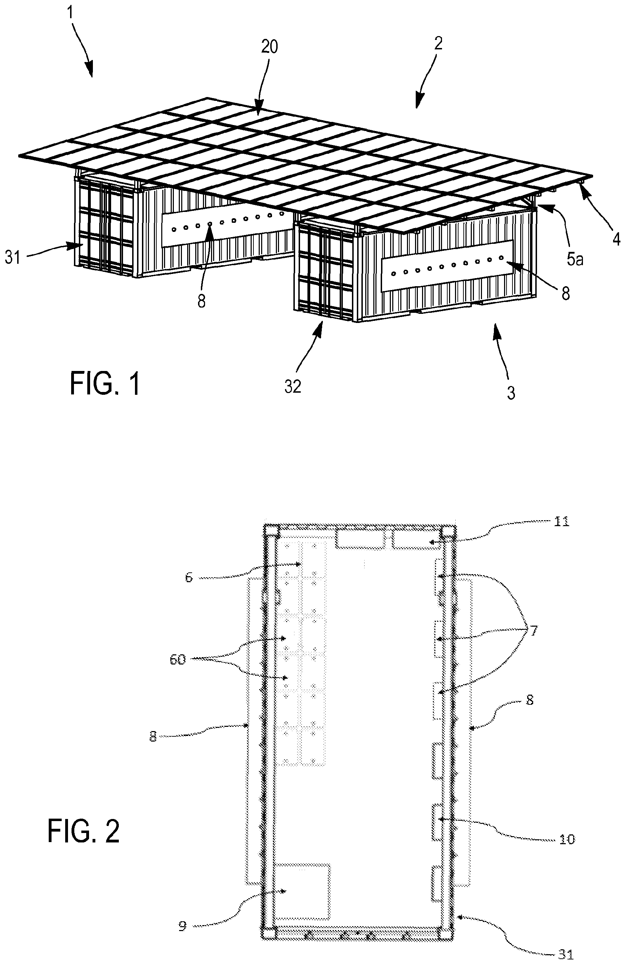

Tel que représentée sur les figures des dessins ci-joints, et notamment sur la figure 1, la présente invention concerne un dispositif 1 autonome de production, de stockage et de distribution d'énergie électrique.

Le présent dispositif 1 comporte au moins un moyen de production d'énergie électrique 2, consistant de préférence en une pluralité de panneaux photovoltaïques 20, visibles sur la figure 1. En l'occurrence, sur cette figure, sont illustrés soixante panneaux photovoltaïques 20, ce qui n'est toutefois aucunement limitatif de l'invention.

Ledit moyen de production d'électricité 2 repose sur au moins un élément support 3, de type conteneur, au travers d'une structure de maintien et de fixation 4 positionnée sur la face supérieure de l'élément support 3, la face inférieure de ce dernier étant destinée à reposer, directement ou indirectement, sur le sol.

Un système de plots pour surélever l'élément support 3, afin d'éviter la stagnation éventuelle d'eau, de boue et de certains nuisibles rampants pourra également être mis en place.

Dans un mode de réalisation tout préférentiel, qui est celui représenté sur la figure 1, le moyen de production d'électricité 2, par exemple sous la forme d'une pluralité de panneaux photovoltaïques 20, repose sur deux conteneurs 31, 32, positionnés, préférentiellement, parallèlement l'un à l'autre et écartés l'un de l'autre d'une certaine distance, par exemple de quelques mètres, entre 5 et 7 mètres préférentiellement.

Cependant, un tel exemple de réalisation ne doit pas être considéré comme étant limitatif de l'invention, et le présent dispositif 1 pourrait également comprendre un seul conteneur 31, par exemple, ou un nombre de conteneurs supérieur à deux, en fonction notamment des besoins en énergie de la zone dans laquelle le dispositif 1 est destiné à être implanté.

Un dispositif 1 comportant deux conteneurs 31, 32, est toutefois particulièrement intéressant, car il permet de déployer une structure support 4 entre lesdits deux conteneurs 31, 32, en sorte d'avoir une surface suffisamment importante de panneaux photovoltaïques 20, pour une production d'électricité en quantité suffisante, tout en assurant un support optimal pour ladite structure de maintien et de fixation 4 sur ces deux conteneurs 31, 32.

La structure support 4 et, de façon plus générale, l'ensemble du dispositif 1, sont dimensionnés pour résister à des vents cycloniques présents dans les zones isolées ciblées pour son installation.

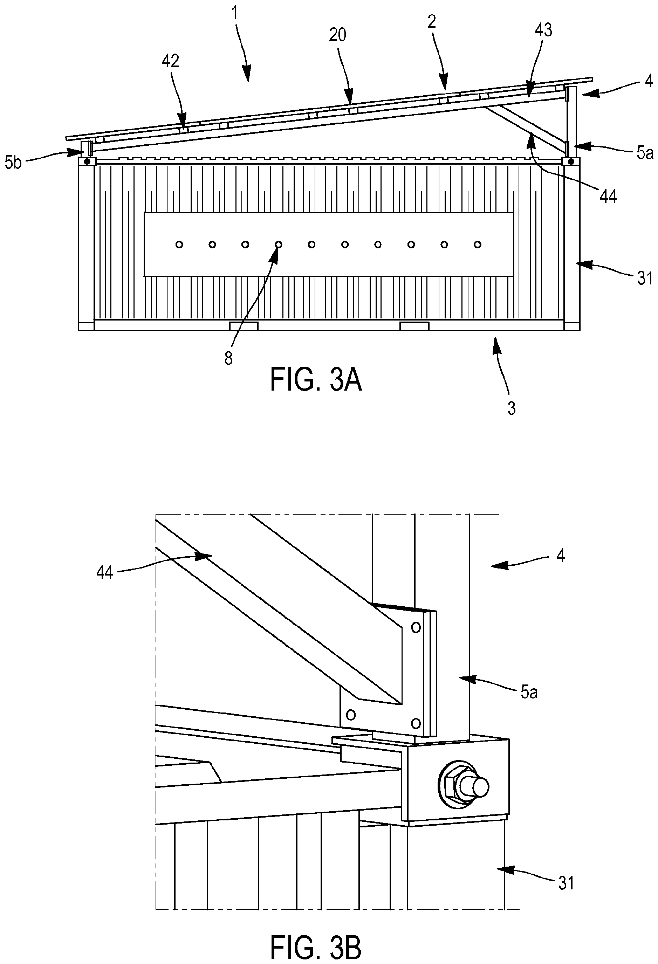

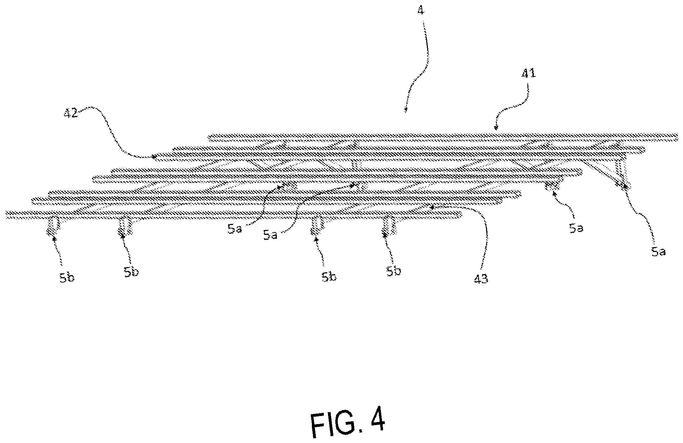

Un mode de réalisation particulier de cette structure de maintien et de fixation 4 est représenté sur les figures 3A, 3B et 4, la figure 3A représentant ladite structure 4 liée au conteneur 31, la figure 3B représentant l'agrandissement d'un détail, en l'occurrence sur la fixation de ladite structure 4 au conteneur 31 et la figure 4 représentant la structure 4 seule.

Ladite structure 4 se présente, de manière avantageuse, sous la forme d'une charpente métallique 41 inclinée, formée d'une pluralité de pannes 42 fixées sur des traverses 43 elles-mêmes solidarisées sur la face supérieure de chaque conteneur 31, 32 via deux montants d'extrémités 5a, 5b, de dimensions, en particulier de hauteurs, différentes.

Lesdits montants 5a, 5b sont avantageusement positionnés aux quatre coins de chacun des conteneurs 31, 32, comme illustré sur la figure 1 et sur la figure 4, où l'on remarque que la structure 4 sous forme d'une charpente métallique 41 comporte quatre montants d'extrémité longs 5a, deux pour un conteneur 31 et deux pour un conteneur 32, et, de même, quatre montants d'extrémités courts 5b.

Tout préférentiellement, chaque montant d'extrémité long 5a est relié à sa traverses 43 par l'intermédiaire d'au moins une contrefiche 44 inclinée.

L'élément support 3, en l'occurrence lesdits conteneurs 31, 32 du dispositif 1, outre leur fonction de support pour les panneaux photovoltaïques 20, peuvent renfermer un certain nombre d'éléments, ou composants, du dispositif 1, comme illustré sur la figure 2.

En tout état de cause, il est envisageable de disposer, dans les conteneurs 31, 32, tout le matériel nécessaire au montage et à l'exploitation du dispositif 1 de production, de stockage et de distribution d'énergie électrique selon l'invention, ce qui aboutit nécessairement à une diminution des coûts de transport, de fabrication, et d'installation dudit dispositif 1.

De plus une grande majorité des équipements composant le dispositif 1 seront montés en usine afin de faciliter l'installation sur site et seuls les éléments disposés à l'extérieur du ou des éléments support(s) 3 seront transportés à l'intérieur desdits éléments supports 3 et montés sur site.

Ainsi, notamment, au moins l'un des deux conteneurs 31, 32 renferme au moins un moyen 6 de stockage interne de l'énergie électrique produite par ledit moyen de production 2 avec lequel ledit moyen de stockage 6 est relié électriquement.

De préférence, ledit moyen 6 de stockage interne consiste en une pluralité de batteries de stockage interne 60, celles-ci permettant une régulation de l'énergie photovoltaïque produite, un stockage de l'énergie en cas de surproduction par rapport aux besoins, et la restitution de cette énergie en cas de pics de consommation ou de production insuffisante par le moyen de production d'énergie électrique 2.

Ces batteries de stockage interne 60 sont notamment aptes à compenser le manque de production d'énergie électrique par les panneaux photovoltaïques 20 lors de journées moins ensoleillées et permettent de fournir une puissance électrique nécessaire pendant la journée d'utilisation, et le soir, lorsque lesdits panneaux 20 ne produisent plus d'électricité.

De préférence, le fonctionnement des batteries de stockage interne 60 est optimisé, dans le dispositif 1 de l'invention, par des régulateurs de charge 10 intégrés à des onduleurs chargeur raccordés au moyen de production 2 et qui sont associés à chacune desdites batteries 60. Le rôle et le fonctionnement de ces régulateurs 10 seront décrits plus en détail ci-dessous.

Toutes les batteries de stockage interne 60 peuvent être renfermées dans un seul des deux conteneurs, par exemple le conteneur 31 comme souhaite l'illustrer la figure 2 annexée, ou bien encore être réparties entre les deux conteneurs 31, 32, selon un mode de réalisation différent et non illustré.

Outre les batteries de stockage internes 60, ledit élément support 3, de préférence sous forme d'au moins un et plus préférentiellement encore de deux conteneurs 31, 32 renferme également au moins un onduleur 7, relié électriquement au moyen de production d'énergie électrique 2, et apte à convertir le courant continu, produit par les panneaux photovoltaïques 20, en un courant alternatif avec lequel est alimenté au moins un connecteur électrique 8, par exemple sous la forme de prises de recharge pour batteries mobiles, le(s)dit(s) connecteur(s) électrique(s) 8 faisant partie du dispositif 1 de l'invention, de même que lesdites batteries mobiles.

De manière particulière, les onduleurs 7 sont équipés d'un programme type MPPT (Maximum Power Point Tracking) qui recherche en permanence le point de puissance maximale des panneaux photovoltaïques 20.

En ce qui concerne à présent les batteries mobiles, externes au dispositif 1, elles ne sont pas représentées sur les figures. Toutefois, celles-ci sont destinées à être confiées aux populations vivant aux alentours du lieu où est implanté le dispositif 1 de l'invention. Lesdites batteries mobiles permettront ainsi une alimentation, en électricité, des habitations des zones non-connectées.

Uniquement ces batteries mobiles, spécialement adaptées au dispositif 1 de l'invention, peuvent être raccordées au(x) connecteur(s) électrique(s) 8. Il est ainsi prévu que d'autres appareils personnels appartenant aux utilisateurs, de type téléphones ou ordinateurs portables, ne puissent pas être branchés sur lesdits connecteurs électriques 8.

Ces batteries mobiles externes sont, par exemple, des batteries portables 400 Wh de technologie Li-Ion, ou équivalent, équipées de ports USB et préférentiellement d'une poignée pour faciliter le transport de ladite batterie. En outre, ces batteries mobiles peuvent être de couleurs variées afin de faciliter leur repérage par leur propriétaire.

Les ports USB permettent d'alimenter, par exemple, un système d'éclairage, par exemple à base de LEDs (« light-emitting diode » en anglais ou diodes électroluminescentes). Le système d'éclairage est composé d'un câble USB lié électriquement à des LEDs d'une puissance, par exemple, d'au moins 15 W au total, et ayant la capacité d'éclairer une surface d'au moins 50 m². Les autres ports USB équipant la batterie mobile peuvent permettre de recharger des petits appareils électroniques (type téléphones ou ordinateurs portables, tablettes, etc.).

Tout préférentiellement, les batteries mobiles destinées à être associées au dispositif 1 de l'invention sont dimensionnées pour une utilisation définie comme suit : alimentation du système d'éclairage, évoqué ci-dessus, pendant une durée de 6h par jour, par exemple, et recharge quotidienne de deux ou trois petits appareils électroniques portables. Un indicateur digital peut être placé sur la batterie mobile pour indiquer le pourcentage de charge de celle-ci.

Pour en revenir aux connecteurs électriques 8 sur lesquels sont destinées à être branchées lesdites batteries mobiles, ceux-ci sont spécialement conçus pour ne charger que les batteries mobiles associées au dispositif 1 de l'invention.

Afin que seules les batteries mobiles faisant partie intégrante du dispositif 1 de l'invention puissent être branchées aux connecteurs électriques, ces derniers peuvent, par exemple mais non limitativement, être équipés d'au moins un détrompeur empêchant toute connexion d'appareils électriques autres que lesdites batteries mobiles externes.

Ces dernières sont munies d'un identifiant, type code-barres, devant être impérativement reconnu par un moyen d'identification dont est équipé ledit dispositif 1, afin que le connecteur 8 auquel est raccordé ladite batterie mobile soit alimenté en électricité pour permettre un rechargement de ladite batterie mobile externe.

Cette caractéristique particulière du dispositif 1 de l'invention, à savoir qu'il comporte une pluralité de batteries mobiles dédiées, permet ainsi d'éviter une utilisation autre ou intempestive de l'énergie produite par ledit dispositif 1, et de garantir à chaque utilisateur se voyant confier une telle batterie mobile de pouvoir la recharger à intervalles de temps réguliers, comme cela sera explicité plus en détails ci-après.

Aussi, aucune autre charge, à l'exception desdites batteries mobiles, n'est admise sur le dispositif 1 de la présente invention.

De manière avantageuse, les connecteurs électriques destinés à assurer la recharge desdites batteries externes sont positionnés sur au moins l'une des faces externes de l'un au moins des conteneurs 31, 32.

Ainsi, par exemple, comme représenté sur les figures 1, 2 et 3, chacun des conteneurs 31, 32 comporte vingt connecteurs électriques 8, répartis sur les deux faces extérieures les plus longues desdits conteneurs 31, 32. En d'autres termes, chacune des faces les plus longues de chacun des conteneurs 31, 32 peut être équipée de dix connecteurs électriques 8.

En sus desdits connecteurs électriques 8 qui, pour mémoire, sont alimentés en énergie électrique soit via les panneaux photovoltaïques 20, après une conversion du signal continu en signal alternatif par au moins un onduleur 7, soit par l'intermédiaire de l'énergie stockée dans les batteries de stockage 60 et redistribué par au moins un régulateur de charge qui est en pratique intégré à un onduleur, ledit dispositif 1 de l'invention peut également comporter au moins un composant supplémentaire. Celui-ci peut consister, par exemple, en au moins un réfrigérateur 9 et/ou au moins un moyen de ventilation et/ou au moins des moyens de télécommunication électroniques et/ou au moins un éclairage et/ou au moins un moyen d'identification, de type lecteur de codes-barres, d'un appareil externe, en l'occurrence les batteries mobiles.

Ledit réfrigérateur 9, dont l'accès peut être attribué avantageusement uniquement à des personnes habilitées, présente préférentiellement une capacité d'au minimum 0,5 m³ et a pour fonction de permettre par exemple la conservation de produits médicamenteux et/ou de vaccins et peut également être utilisé pour tout type de conservation au froid.

En ce qui concerne à présent lesdits moyens de télécommunication électroniques, ceux-ci comportent au moins un serveur WEB, un routeur WIFI et un routeur internet, et ont pour fonction de permettre aux utilisateurs présents à proximité du dispositif 1 et qui viennent, par exemple, pour le rechargement de la batterie mobile qui leur a été allouée, de se connecter sur internet (charger des documents, emails, etc.), et de patienter durant le temps de charge de leur batterie mobile personnelle.

En outre, de manière particulièrement avantageuse, lesdits moyens de télécommunication électroniques sont aptes à permettre, d'une part, le transfert à distance et en temps réel de différentes données relatives au fonctionnement du dispositif 1, comme la production d'énergie électrique, l'état de charge des batteries de stockage interne et, d'autre part, un dialogue et un contrôle à distance du dispositif par des spécialistes.

Cela apporte une sécurité supplémentaire à l'exploitant et aux utilisateurs du dispositif 1 puisqu'il y a une analyse permanente de la vitalité des différents organes électriques, électroniques et informatiques. La vérification du respect du domaine de fonctionnement de ces équipements permet d'anticiper toute panne ou casse en procédant à l'arrêt immédiat dudit équipement présentant un défaut. Ce dispositif d'arrêt est automatisé et contrôlé par un serveur localisé à distance, dans le poste central dont il a été question auparavant.

En dernier lieu, afin de procéder à l'amélioration continue du dispositif 1 et de l'algorithme gérant le couple production électrique / consommation électrique, les heures des connexions et de déconnexions des batteries mobiles et de l'accès à internet des utilisateurs sont prises en compte.

En pratique, le système de pilotage effectue une mémorisation des heures et jours exacts de connexions effectives des batteries (tension et intensité) et des durées de rechargement ainsi que des heures et jours des connexions au réseau WIFI. Il envoie ensuite ces données et ces informations par radio-télécommunication à des fins, notamment, d'analyse comportementale des utilisateurs, lesquelles permettent l'amélioration continue de l'algorithme du dispositif gérant ledit couple production électricité du dispositif / consommation du dispositif.

Pour ce qui est du moyen d'identification, son rôle et son fonctionnement seront détaillés plus loin dans la description.

Quoiqu'il en soit, les divers composants supplémentaires susmentionnés nécessitant également une alimentation en énergie électrique selon un signal alternatif, ils sont également reliés à au moins un onduleur 7 ou aux batteries de stockage 60, pour une alimentation en énergie via les panneaux photovoltaïques 20 ou via lesdites batteries 60, en fonction de l'énergie électrique disponible.

En outre, il est à noter que, de manière particulièrement avantageuse due à la conception originale du présent dispositif, ces éléments peuvent être contenus dans l'élément support 3 dudit dispositif 1.

Dans le mode de réalisation avantageux représenté sur les figures, ces éléments peuvent être contenus dans l'un et/ou dans l'autre des conteneurs 31, 32, servant d'élément support 3.

En outre, de manière essentielle, la distribution de l'énergie qui est produite par les moyens de production 2, autrement dit par les panneaux photovoltaïques 20, aux différents éléments du dispositif 1 de l'invention, batteries de stockage 60, connecteurs électriques 8, etc., est gérée par un système de pilotage qui comprend, au moins, des moyens de gestion du stockage et de la distribution de l'énergie produite par lesdits moyens de production 2.

En effet, selon notamment le moment de la journée, la puissance produite par les panneaux 20, la charge des batteries de stockage interne 60, la demande en énergie électrique des différents consommateurs, à savoir notamment les organes internes du dispositif 1, les batteries mobiles en rechargement, la télécommunication électronique, le ou les réfrigérateur(s), etc., varient.

Le système de pilotage a donc pour fonction de gérer la distribution de l'énergie électrique directement produite pour l'affecter en priorité aux différentes charges et, pour la capacité excédentaire produite, au rechargement des batteries de stockage interne 60. Alternativement, le système gère la distribution d'énergie électrique depuis les batteries de stockage 60 vers les différentes charges au moins pour le fonctionnement interne du dispositif 1 puis, si la capacité énergétique est suffisante, aux différentes charges, notamment les connecteurs électriques 8.

A cet effet, dans un exemple de réalisation particulièrement intéressant, lesdits moyens de gestion du stockage et de la distribution d'énergie du système de pilotage comprennent, au moins :
- Un serveur, qui est préférentiellement en communication avec un boîtier de communication lui-même réceptionnant, par exemple par Bluetooth, des informations provenant, au moins, de la sortie des onduleurs 7 ;
- Une pluralité de microcontrôleurs, eux-mêmes sous le contrôle dudit serveur et commandés par ce dernier, par exemple en IP ;
- Un relais pour chaque connecteur électrique 8, les relais étant commandés par un microcontrôleur, sachant qu'un microcontrôleur peut commander un seul ou une pluralité de relais. Un relais permet d'alimenter ou non un connecteur électrique 8. Les entrées des relais sont avantageusement installées dans un coffret électrique 11 ;
- Eventuellement un relais relié à chacun des composants additionnels facultatifs du dispositif 1 mentionnés ci-dessus, à savoir, par exemple, au moins un réfrigérateur 9 et/ou un moyen de ventilation et/ou des moyens de télécommunication électroniques et/ou un éclairage et/ou un moyen d'identification, de type lecteur de codes-barres des batteries mobiles ;
- Un régulateur 10 de charge et de décharge pour chaque moyen de stockage interne de l'énergie électrique 6, autrement dit pour chaque batterie de stockage 60, ledit régulateur 10, associé à un onduleur-chargeur, permettant d'éviter des décharges des batteries 60 trop importantes qui seraient susceptibles de diminuer la durée de vie de la batterie de stockage 60. Le régulateur de charge 10 de chaque batterie de stockage 60 vérifie, notamment, la tension à la sortie de ladite batterie 60 et gère la distribution de l'électricité produite par les panneaux photovoltaïque 20. Le régulateur 10 et son onduleur associé communiquent également avec le serveur en IP.

Lesdits moyens de gestion du stockage et de la distribution d'énergie gèrent, par l'intermédiaire de modules logiciels :
- La distribution de l'énergie photovoltaïque entre, d'une part, les batteries de stockage 60 et, d'autre part, les différents organes internes de fonctionnement du dispositif 1, les connecteurs électriques 8 pour la recharge des batteries mobiles et/ou les moyens de télécommunication électronique et/ou encore l'alimentation en énergie électrique des composants additionnels (réfrigérateur 9, etc.) ;
- La charge des batteries mobiles par l'intermédiaire des connecteurs électriques 8 ;
- Les informations concernant la production d'électricité, le régime de fonctionnement des organes du dispositif (batteries, onduleurs, régulateurs, etc.) et les éventuelles pannes en cas de dysfonctionnement.

Ainsi, notamment, lorsque la production d'électricité provenant des panneaux solaires 20 est supérieure à la demande d'énergie globale du dispositif 1, qui représente, par exemple, l'énergie consommée pour le fonctionnement interne (microcontrôleurs, compteurs d'énergie, LEDs, serveur, etc.) du dispositif 1 et/ou l'énergie soutirée par les différentes charges (recharge batteries mobiles, télécommunication électronique, réfrigérateur, ventilation), l'énergie en sus est stockée dans les batteries de stockage interne 60. En pratique, le dispositif 1 lui-même, c'est-à-dire les différents organes internes dédiés à son fonctionnement propre, consomme une partie non négligeable de l'énergie chaque jour juste pour fonctionner, et représente la charge principale, devant les connecteurs/batteries et la radio-télécommunication.

Lorsque, au contraire, l'énergie produite par les panneaux 20 n'est pas suffisante pour supporter la charge des divers composants du dispositif 1 rappelés ci-dessus, les batteries de stockage interne 60 interviennent afin de délivrer l'énergie qui reste à fournir.

Selon un mode de réalisation particulier, lesdits moyens de gestion du stockage et de la distribution d'énergie comportent deux compteurs d'énergie associés à chacun des connecteurs électriques 8, un des deux compteurs étant en redondance en cas de panne du premier, lesdits compteurs étant avantageusement reliés électriquement au serveur.

Chaque compteur est apte, d'une part, à relever l'énergie distribuée, le courant et la tension délivrés au connecteur 8 auquel il est associé et, d'autre part, à envoyer les informations relevées au serveur.

Cela permet de déterminer l'état de charge d'une batterie mobile branchée sur un connecteur électrique 8 et, par conséquent, de suspendre l'alimentation en énergie électrique dudit connecteur 8 lorsque ladite batterie mobile est en fin de charge.

En outre, de manière avantageuse, les valeurs qui sont transmises au serveur par les compteurs permettent également de donner des informations sur le comportement des utilisateurs et le fonctionnement, à un instant I donné, du dispositif 1 de l'invention, comme l'heure et le temps de charge des batteries mobiles, l'énergie distribuée à chaque batterie mobile, ou bien encore l'énergie totale distribuée dans une journée par ledit dispositif 1. Lesdites informations sont transmises par le système de radio-télécommunication en temps réel.

Pour gérer la distribution de l'électricité dans le dispositif 1 de l'invention, le système de pilotage va constamment consulter l'état de charge du moyen de stockage interne 6 afin d'alimenter ou non des éléments tels que les connecteurs électriques 8, les moyens de télécommunication électroniques, le réfrigérateur 9, etc...

L'ordre d'alimentation se fait par l'intermédiaire des microcontrôleurs commandés par le serveur en IP et auxquels sont connectés les relais, un relais étant associé à chaque connecteur 8 et à d'autres composants du dispositif 1.

Une valeur seuil S1 de l'énergie nécessaire au fonctionnement minimum de tout le dispositif 1 de l'invention doit toujours être disponible, de manière globale, dans le moyen de stockage interne 6, et ce afin de pouvoir anticiper une baisse soudaine de la production d'électricité par les panneaux photovoltaïque 20 due à un passage de nuages par exemple.

L'énergie stockée à la valeur seuil S1 permettra d'assurer l'alimentation des moyens du système de pilotage du dispositif 1 notamment le serveur, les microcontrôleurs, les compteurs, etc., tout particulièrement lorsque les panneaux photovoltaïques 20 ne produisent plus d'énergie, notamment pendant la nuit.

Cette valeur seuil S1 correspond à une certaine capacité des batteries de stockage interne 60. Elle peut varier en fonction des heures de la journée et, dans un exemple de réalisation, elle a été définie par simulation : par exemple, de 8 heures à 15 heures, une valeur seuil S1 a été déterminée et, de 15 heures à 18 heures, une valeur seuil, par exemple S1', supérieure à la valeur seuil S1, a été déterminée.

Le système de pilotage peut donc déterminer les actions à suivre en fonction de l'état de charge des batteries de stockage 60 et des heures de la journée.

De 8 heures à 15 heures, par exemple, lorsque l'énergie disponible dans les batteries de stockage interne 60 est inférieure à la valeur seuil S1, le système entre dans un état de déconnexion. Cet état permet de déconnecter les différentes charges suivant un protocole précis afin de permettre aux batteries de stockage 60 de se recharger jusqu'à atteindre une énergie disponible supérieure à la valeur seuil S1 et dite valeur S2.

De manière avantageuse, le protocole de déconnexion est le suivant :
- Phase 1 : Le serveur interroge le système d'alimentation du dispositif de télécommunication électronique de type serveur Wifi/GPRS pour voir si celui-ci est alimenté ou non. Dans le cas où il est alimenté, le serveur le déconnecte pendant 20 minutes. Au bout des 20 minutes, le serveur interroge les moyens de stockage 6 et vérifie l'énergie disponible. Si les moyens de stockage 6 ont atteint une capacité supérieure à la valeur seuil S1, en pratique une valeur prédéterminée S2, les moyens de télécommunication électroniques sont reconnectés. Si ce n'est pas le cas, les moyens de télécommunication électroniques restent déconnectés et on passe à la phase 2. La valeur S2 à atteindre conduit à laisser une « zone » tampon d'énergie disponible (S2 - S1) permettant d'éviter au système de connecter et déconnecter les dispositifs de manière intempestive, accélérant le vieillissement des équipements.
- Phase 2 : Le serveur interroge les systèmes d'alimentation des connecteurs électriques 8 afin de déterminer les connecteurs 8 qui sont alimentés et ceux qui ne le sont pas. Dans le cas où aucun connecteur 8 n'est alimenté, on passe à la phase 3. Dans le cas contraire, le serveur interroge les connecteurs électriques 8 alimentés et détecte les deux connecteurs 8 (n₁=2) qui ont le plus long temps de chargement. Ces connecteurs 8 sont déconnectés pendant 20 minutes. Au bout de ces 20 minutes, le serveur interroge les moyens de stockage 6 et vérifie l'énergie disponible. Si les moyens de stockage 6 ont atteint une capacité supérieure ou égale à la valeur S2, les connecteurs 8 sont reconnectés ainsi que les moyens de télécommunication électroniques. Si ce n'est pas le cas, le serveur reprend la phase de déconnexion 2 en incrémentant de 2 (n₂=2) le nombre de connecteurs électriques déconnectés tout en gardant les moyens de télécommunication électroniques déconnectés tant que les moyens de stockage 6 n'ont pas atteint une capacité supérieure ou égale à la valeur S2. Lorsque cette capacité est atteinte, tous les connecteurs 8 qui ont été déconnectés, et les moyens de télécommunication électroniques, sont à nouveau alimentés. Si ladite capacité n'est pas atteinte, le serveur reprend en boucle la phase de déconnexion 2 jusqu'à l'arrêt de l'ensemble des connecteurs électriques 8 en fonctionnement (c'est-à-dire branchés à un dispositif de type batterie mobile) et le système de pilotage passe ensuite à la phase 3.

- Phase 3 : Le serveur interroge le système d'alimentation du réfrigérateur 9 afin de vérifier que celui-ci est alimenté. Si le réfrigérateur 9 n'est pas alimenté, on passe à la phase 4. Si le réfrigérateur 9 est alimenté, le serveur ordonne au système d'alimentation du réfrigérateur 9 de ne plus l'alimenter pendant 20 minutes. Au bout des 20 minutes, le serveur interroge les moyens de stockage 6. Si ceux-ci ont une capacité supérieure à la valeur S2, le serveur alimente à nouveau les moyens de télécommunication électroniques, les connecteurs 8 qui ont été déconnectés ainsi que le réfrigérateur 9. Dans le cas contraire, le réfrigérateur 9 reste déconnecté et on passe à la phase 4.
- Phase 4 : L'énergie disponible dans les moyens de stockage 6 n'est pas suffisante pour assurer l'alimentation des éléments de contrôle en cas de production insuffisante des panneaux photovoltaïques 20. Le serveur envoie une alerte à l'exploitant, en contrôle à distance dans son poste central, afin de signaler l'énergie insuffisante dans les moyens de stockage 6, puis tous les capteurs sont déconnectés hormis les capteurs d'énergie des moyens de stockage 6. Lorsque ces derniers ont atteint la valeur S2, tous les éléments qui ont été déconnectés sont à nouveau alimentés.
- En cas de déconnexion totale résultant d'une énergie nulle dans les moyens de stockage 6 et d'une production photovoltaïque nulle, le serveur et les différents organes du dispositif 1 redémarrent dès qu'ils se trouvent réalimentés en énergie.

En outre, en raison de la production d'énergie électrique photovoltaïque intermittente, et pour optimiser à la fois le nombre de panneaux solaires 20 et la capacité des batteries de stockage internes 60, seule une partie des batteries mobiles qui sont distribuées aux habitants peuvent être chargées par jour, par rapport à la totalité des batteries mobiles qui sont associées au dispositif 1.

Tout au long de la journée, l'alimentation des connecteurs électriques 8, et donc la charge des batteries mobiles qui y sont branchées, est gérée par les moyens de gestion du système de pilotage du dispositif 1 en fonction de l'énergie disponible dans les batteries de stockage 60.

Une utilisation optimale des batteries mobiles comme définie précédemment dans la description détaillée, à savoir alimentation d'un système d'éclairage et recharge de petits appareils électroniques, permet auxdites batteries mobiles d'avoir une autonomie de plusieurs jours, en particulier de trois jours.

La recharge d'une batterie mobile par le dispositif 1 de l'invention est donc avantageusement autorisée par le système de pilotage tous les trois jours.

A cet effet, les batteries mobiles sont équipées d'un identifiant de type code-barres et, pour mémoire, ledit dispositif 1 est équipé d'au moins un moyen d'identification, de type lecteur de codes-barres, apte à décrypter l'identifiant se trouvant sur chaque batterie mobile.

Avantageusement, ledit moyen d'identification, sous la forme d'au moins un lecteur de codes-barres équipé d'au moins un moyen d'affichage, type écran, est positionné sur l'élément support 3, en l'occurrence sur au moins l'un et/ou l'autre conteneur 31, 32, dans le mode de réalisation préférentiel dans lequel le dispositif 1 comprend deux conteneurs 31, 32, en tant qu'élément support 3.

Lorsqu'une batterie mobile doit être rechargée, l'identifiant se trouvant sur ladite batterie est passé devant le moyen d'identification.

Celui-ci envoie l'identification décryptée de la batterie mobile au système de pilotage, par exemple via une connexion USB, qui vérifie, dans la base de données, que l'identifiant correspond à une batterie mobile qui a été rechargée il y a, par exemple, trois jours.

Dans le cas où la dernière recharge a eu lieu il y a moins ou plus de trois jours, le système de pilotage envoie un message d'erreur à afficher sur l'écran du moyen d'identification pour indiquer le refus de chargement et le jour de la prochaine charge possible pour la batterie mobile en question.

Ce refus fait également partie des informations qui sont collectées et envoyées dans une base de données du serveur, de même que la date T et l'instant t1 précis auxquels la batterie mobile a été identifiée.

Cependant, la date de la dernière charge reste inchangée.

Dans le cas de figure où la dernière recharge a été effectuée il y a trois jours, le système de pilotage inscrit la date et l'heure de la lecture de la batterie mobile identifiée dans la base de données du serveur et permet la recharge de la batterie mobile concernée.

Comme pour la gestion de la charge et la décharge des batteries de stockage interne 60, le système de pilotage gère l'alimentation des connecteurs électriques 8 de recharge des batteries mobiles par l'intermédiaire des microcontrôleurs auxquels sont reliés des relais, lesdits microcontrôleurs étant commandés par le server en IP.

Préférentiellement, un numéro est attribué à chacun des connecteurs électriques 8 destinés à recevoir les batteries mobiles pour leur recharge. Ces numéros sont inscrits sur l'élément support 3, par exemple sur les conteneurs 31, 32 sur les faces desquels les connecteurs 8 sont positionnés et dans la base de données.

Lorsque la charge d'une batterie mobile a été autorisée, le serveur identifie un connecteur électrique 8 non encore alimenté puis envoie l'information, c'est-à-dire le numéro du connecteur 8 identifié, sur un moyen d'affichage, par exemple, mais non limitativement l'écran associé au moyen d'identification, et se trouvant sur une des faces de l'élément support 3.

Avantageusement, autour de chacun des connecteurs électriques 8 sont disposées une ou plusieurs LEDs qui s'éclairent ou non en fonction de l'état du connecteur 8. Tout préférentiellement, ces LEDs sont également gérées par le système de pilotage, par l'intermédiaire de microcontrôleurs commandés en IP par le serveur et reliés à des relais.

Lorsqu'un connecteur électrique 8 est attribué à une batterie mobile, la LED, ou les LEDs, correspondante(s) clignote(nt), par exemple, permettant ainsi de faciliter le repérage du connecteur 8.

Le serveur vérifie ensuite, avantageusement, que la puissance à fournir pour alimenter le connecteur électrique 8 est disponible et que le système de pilotage n'est pas en état de déconnexion pour pallier l'insuffisance d'énergie disponible dans la batterie de stockage interne 60 inférieure à la valeur seuil.

Ces deux paramètres vont définir l'alimentation ou non du connecteur 8 :
- Etat de déconnexion ou puissance insuffisante pour alimenter le connecteur 8 : le serveur ordonne le clignotement des LEDs se trouvant autour du connecteur électrique 8 attribuée à la charge de la batterie mobile. Tant que l'état de déconnexion n'est pas levé, le connecteur électrique 8 n'est pas alimenté, les LEDs continuent de clignoter et le serveur ne récupère pas l'heure de début de chargement. Lorsque l'état de déconnexion est levé, le programme de pilotage applique le protocole pour l'état de connexion tel que défini ci-après :
- Etat de connexion et puissance suffisante pour alimenter le connecteur électrique 8 : le serveur ordonne le clignotement des LEDs se trouvant autours du connecteur électrique 8 attribué à la charge de la batterie mobile. Le serveur récupère l'heure à laquelle ladite batterie mobile a été identifiée ainsi que la valeur du courant de charge affichée au compteur du connecteur électrique 8 attribué à la batterie en question. Pendant une période de m minutes, par exemple entre 1 et 4 min, de préférence pendant 2 min, après l'heure d'identification de la batterie mobile, le serveur interroge en boucle la valeur du courant de charge du compteur du connecteur électrique 8 attribué à la charge de la batterie.
   - Si cette valeur de courant de charge est supérieure à la valeur précédente, cela signifie que la batterie mobile s'est connectée au connecteur électrique 8, et qu'il y a bien charge de ladite batterie. Le serveur inscrit donc la date et l'heure du jour en tant que date et heure de la dernière charge et ordonne aux LEDs de passer de l'état clignotement à l'état allumé. Le serveur consultera régulièrement le compteur afin de vérifier l'état de charge de la batterie mobile en repérant une diminution du courant de charge. Lorsque le courant de charge diminue, le connecteur électrique 8 n'est plus alimenté et la batterie mobile est considérée comme chargée. Si le courant de charge ne diminue pas au bout de 4 heures de connexion effective (hors déconnexion), le connecteur électrique 8 est tout de même déconnecté et la batterie mobile considérée comme chargée.
   - Si la valeur du compteur est la même que la valeur précédente, cela signifie que la batterie mobile n'a pas été connectée. Le serveur arrête l'alimentation du connecteur électrique 8 et indique dans la base de données la non connexion de la batterie mobile. Cependant le serveur ne va pas inscrire la date du jour comme date de dernier chargement, mais va garder la date précédente.

Le dispositif 1 autonome de production, de stockage et de distribution d'électricité selon la présente invention est particulièrement avantageux. Comme il a été démontré dans l'exposé de l'invention qui précède, il s'agit d'un dispositif 1 entièrement autonome, compact, de montage et d'utilisation aisés, permettant d'amener l'énergie dans des zones reculées de pays en développement et ne disposant pas d'un réseau suffisamment développé.

Plus précisément, les éléments du dispositif 1, et notamment l'élément support 3, pouvant consister en des conteneurs 31, 32, aisément transportables par voie terrestre et/ou maritime, peuvent comporter tout le matériel nécessaire au montage et à l'exploitation du dispositif 1.

Bien entendu, l'invention n'est pas limitée aux exemples illustrés et décrits précédemment qui peuvent présenter des variantes et modifications sans pour autant sortir du cadre de l'invention.

Ainsi, par exemple, le dispositif 1 selon l'invention décrit en détail ci-dessus peut être équipé d'un système de traitement d'eau, par exemple un système de traitement d'eau salée de type à osmose inverse. Un tel système permet de traiter de l'eau salée pour la transformer en eau potable et peut être installé dans l'élément support 3 du dispositif 1, autrement dit dans l'un et/ou dans l'autre des conteneurs 31, 32.

Dans ce mode de réalisation, le système de traitement d'eau peut être alimenté par l'énergie solaire produite par les panneaux photovoltaïques 20 et/ou par l'énergie stockée dans le moyen de stockage interne 6. En outre, il est alors envisageable de prévoir l'aménagement d'une rampe de dix robinets sur la face extérieure de l'un et/ou de l'autre des conteneurs 31, 32 pour la distribution.

Le système de pilotage du dispositif 1 de l'invention sera alors programmé pour accommoder la distribution d'énergie entre les connecteurs électrique 8 et/ou le système de traitement d'eau, et/ou le ou les réfrigérateur(s) et/ou les moyens de télécommunication électroniques, etc.

Dans un autre exemple, où le dispositif 1 est implanté à l'intérieur d'une terre et se situe à proximité d'un point d'eau autre que de l'eau salée, le système de traitement d'eau est remplacé par des moyens de pompage.

Dans tous les cas de configuration, l'invention est facile à mettre en oeuvre sur site, car les conteneurs sont largement prémontés en usine, à l'avance. Cela permet des opérations de montage sur place très réduites, concernant seulement quelques éléments non montés en usine et transportés dans le dispositif 1, qui doivent donc être installés sur le site de production électrique.

Il est en outre à souligner que les dispositifs selon l'invention sont dimensionnés de sorte que la production électrique photovoltaïque couvre à tout instant t l'ensemble des charges (organes internes et/ou connecteurs électriques et/ou moyens de télécommunication électronique et/ou réfrigérateur, etc.) et permettent d'assurer de l'énergie à l'ensemble des utilisateurs associés au dispositif - c'est-à-dire bénéficiant d'un identifiant - et dont le nombre a été maximisé et prédéterminé pour chaque dispositif.

## Revendications

1. Dispositif (1) mobile et autonome de production, de stockage et de distribution d'énergie électrique comprenant des moyens de production d'énergie électrique (2), de préférence des panneaux photovoltaïques (20), reposant sur au moins un élément support (3), par exemple un conteneur maritime standardisé (31, 32), ce dernier renfermant des moyens de stockage interne (6) de l'énergie électrique produite par lesdits moyens de production (2), ledit élément support (3) renfermant également des moyens de transformation des signaux issus des moyens de production (2) en des signaux aptes à alimenter des moyens de stockage d'énergie, au moins un connecteur électrique (8) de raccordement de dispositifs externes de stockage d'énergie, ledit élément support (3) intégrant également un système de pilotage comprenant des moyens de gestion du stockage et de la distribution de l'énergie produite par lesdits moyens de production (2) reliés à des capteurs de mesure de paramètres de fonctionnement équipant une pluralité d'éléments du dispositif (1), et des moyens de télécommunication électroniques, **caractérisé en ce que** lesdits dispositifs externes de stockage d'énergie sont des batteries mobiles faisant partie intégrante du dispositif (1) et comportent chacune un identifiant reconnu par un moyen d'identification que comporte ledit élément support (3), ledit moyen d'identification étant connecté au système de pilotage qui autorise ou non l'alimentation de ladite batterie mobile, et comportant des moyens d'affichage, lesdites batteries mobiles faisant partie intégrante du dispositif (1) étant les seuls appareils susceptibles d'être rechargés par ledit au moins un connecteur électrique (8) que comporte ledit dispositif (1).

2. Dispositif (1) selon la revendication précédente **caractérisé en ce que** chacune des batteries mobiles faisant partie intégrante du dispositif (1) comporte des moyens de raccordement spécifiques audit au moins un connecteur électrique (8), lesdites batteries mobiles étant spécialement conçues pour être les seuls appareils susceptibles de se connecter audit au moins un connecteur électrique (8) que comporte le dispositif (1).

3. Dispositif (1) selon la revendication 1 ou la revendication 2 **caractérisé en ce que** chacun des connecteurs électriques (8) est équipé d'au moins un détrompeur empêchant toute connexion d'appareils électriques autres que lesdites batteries mobiles faisant partie intégrante du dispositif (1).

4. Dispositif (1) selon l'une quelconque des revendications précédentes **caractérisé en ce que** le système de pilotage comprend au moins un serveur contrôlant, d'une part, une pluralité de microcontrôleurs commandant des moyens d'ouverture/fermeture, consistant en des relais, au moins des lignes électriques associées à chaque connecteur électrique (8) et, d'autre part, au moins un régulateur (10) de charge et de décharge pour les moyens de stockage interne (6).

5. Dispositif (1) selon l'une quelconque des revendications précédentes **caractérisé en ce que** les moyens de transformation des signaux consistent en au moins un onduleur (7) raccordé en aval desdits moyens de production (2) et en amont des connecteurs électriques (8) et au moins un régulateur de charge (10) raccordé entre lesdits onduleurs des moyens de production (2) et les moyens de stockage interne (6).

6. Dispositif (1) selon la revendication 4 **caractérisé en ce que** sur chaque ligne électrique, en aval des moyens de transformation des signaux, au moins un compteur est raccordé en amont d'un relais, un disjoncteur étant connecté entre eux.

7. Dispositif (1) selon l'une quelconque des revendications précédentes **caractérisé en ce que** ledit élément support (3) renferme également des lignes électriques alimentant au moins un réfrigérateur (9) et/ou au moins un moyen de ventilation et/ou au moins un éclairage.

8. Dispositif (1) selon l'une quelconque des revendications précédentes **caractérisé en ce que** les moyens de télécommunication électroniques comportent au moins un serveur WEB, un routeur WIFI et un routeur internet.

9. Dispositif (1) selon l'une quelconque des revendications précédentes **caractérisé par le fait que** le système de pilotage et ses moyens de gestion du stockage et de la distribution d'énergie comprennent des capteurs de tension, de courant, et d'énergie.

10. Dispositif (1) selon l'une quelconque des revendications précédentes **caractérisé par le fait qu'**il comporte, en tant qu'éléments supports (3), deux conteneurs (31, 32) sur lesquels est fixée une structure (4) de maintien et de fixation d'une pluralité de panneaux photovoltaïques (20), lesdits connecteurs électriques (8) étant positionnés sur les faces extérieures d'au moins l'un des deux conteneurs (31, 32).

11. Dispositif (1) selon la revendication 10 **caractérisé par le fait que** ladite structure (4) de maintien et de fixation d'une pluralité de panneaux photovoltaïques (20) se présente sous la forme d'une charpente métallique (41) inclinée, formée d'une pluralité de pannes (42) fixées sur des traverses elles-mêmes solidarisées sur la face supérieure de chaque conteneur (31,32) via deux montants d'extrémités (5a, 5b) de dimensions, en particulier de hauteurs, différentes, lesdits montants étant positionnés aux quatre coins de chacun des conteneurs (31, 32), ladite structure (4) comportant quatre montants d'extrémité longs (5a), deux pour un conteneur (31) et deux pour un conteneur (32), et, de même, quatre montants d'extrémités courts (5b).

12. Dispositif (1) selon l'une quelconque des revendications précédentes **caractérisé en ce que** les connecteurs électriques (8) comportent des moyens de repérage consistant en une ou plusieurs LED(s) gérée(s) par le système de pilotage.

13. Procédé de gestion de l'énergie produite par un dispositif (1) mobile et autonome de production, de stockage et de distribution d'énergie électrique selon les revendications 4, 7 et 9 à 12, **caractérisé par** les étapes suivantes :
- Etablissement d'une première valeur seuil S1 de niveau d'énergie disponible dans les moyens de stockage interne (6) nécessaire au fonctionnement du dispositif (1) ;
- Etablissement d'une deuxième valeur S2 de niveau d'énergie disponible dans les moyens de stockage interne (6) de sorte que S2 > S1 ;
- En cas de passage sous ladite première valeur seuil S1, déconnexion des moyens de télécommunication électroniques pendant une première période d1 de durée prédéterminée, puis contrôle en boucle du niveau d'énergie disponible dans les moyens de stockage interne (6) à l'issue de ladite première période d1, et reconnexion des moyens de télécommunication électroniques si ledit niveau est supérieur à la deuxième valeur S2 ;
- Si ledit niveau d'énergie disponible est toujours inférieur à la deuxième valeur S2, détection du nombre de connecteurs électriques (8) en phase active d'alimentation d'une charge, et calcul de leur durée d'alimentation tₐ ;
- Déconnexion des n₁ connecteurs électriques (8) présentant les durées d'alimentation tₐ les plus élevées pendant une seconde période de durée prédéterminée d2, puis contrôle en boucle du niveau d'énergie disponible dans les moyens de stockage interne (6) à l'issue de ladite seconde période d2 et, si la valeur S2 n'est pas atteinte, reprise de la phase de déconnexion en incrémentant de n₂ le nombre de connecteurs électriques (8) déconnectés, tout en gardant les moyens de télécommunication électroniques déconnectés ;
- Reconnexion des connecteurs électriques (8) déconnectés et des moyens de télécommunication électroniques dès que ledit niveau d'énergie disponible dans les moyens de stockage interne (6) est supérieur ou égale à la deuxième valeur S2 ;
- Si aucun ou plus aucun connecteur électrique (8) n'est en phase active d'alimentation d'une charge, contrôle de la ligne d'alimentation du réfrigérateur (9) et déconnexion de ladite ligne si le réfrigérateur est alimenté, pendant une troisième période de durée prédéterminée d3, puis contrôle en boucle du niveau d'énergie disponible dans les moyens de stockage interne (6) à l'issue de ladite troisième période d3, et reconnexion du réfrigérateur (9), de l'ensemble des connecteurs électriques (8) et des moyens de télécommunication électroniques dès que ledit niveau est supérieur à la deuxième valeur S2 ;
- Si ledit niveau d'énergie disponible est toujours inférieur à la deuxième valeur S2, envoi d'une alerte d'insuffisance d'énergie et déconnexion des capteurs à l'exception de capteurs d'énergie des moyens de stockage interne (6), puis contrôle en boucle du niveau d'énergie disponible dans lesdits moyens de stockage interne (6) et reconnexion des éléments déconnectés dès que ledit niveau d'énergie est supérieur à la deuxième valeur S2.
- En cas de détection d'une énergie nulle dans les moyens de stockage interne (6) et si la production photovoltaïque est nulle, le serveur et les différents organes du dispositif (1) redémarrent dès qu'ils se trouvent réalimentés en énergie.

14. Procédé de gestion de l'énergie selon la revendication précédente, **caractérisé en ce que** les valeurs S1 et S2 sont variables selon des tranches horaires définies dans une période temporelle correspondant à une journée.

15. Procédé de gestion de l'énergie selon l'une des revendications 13 ou 14 **caractérisé en ce que** :
- La première valeur de seuil S1 est comprise entre 1 et 8 kWh ;
- La seconde valeur S2 est supérieure ou égale à S1 + 1 kWh et comprise entre 2 et 10 kwh ;
- La première durée prédéterminée d1 est comprise entre 2 min et 30 min ;
- La seconde durée prédéterminée d2 est comprise entre 2 min et 30 min ;
- La troisième durée prédéterminée d3 est comprise entre 2 min et 30 min.

16. Procédé de gestion de l'énergie selon l'une des revendications 13 à 15, appliqué à un dispositif selon l'une quelconque des revendications 1 à 12, **caractérisé en ce que**, pour le chargement des moyens de stockage externe d'énergie :
- Lecture par les moyens d'identification de l'identifiant d'un dispositif de stockage externe d'énergie et relève de l'instant t1 et de la date T de lecture ;
- Contrôle par le système de pilotage de la dernière date M de chargement dudit dispositif de stockage externe d'énergie ;
- Calcul de la durée D = T - M et comparaison de D avec une durée prédéterminée L imposée entre deux chargements ;
- Refus de chargement si D est différent de L, et envoi, par le système de pilotage, et visualisation sur les moyens d'affichage d'un message indiquant la prochaine date autorisée ;
- Sinon, le système de pilotage réalise une mémorisation du moment de l'identification, puis l'affectation et la visualisation du connecteur électrique (8) alloué par activation des moyens de repérage dudit connecteur (8).

17. Procédé de gestion de l'énergie selon la revendication précédente, **caractérisé en ce que** :
- Identification d'un compteur correspondant au connecteur électrique (8) affecté et mémorisation de la valeur v1 de comptage du courant de charge et de l'instant t1 ;
- Contrôle en boucle pendant une durée prédéterminée comprise entre 1 min et 4 min de la valeur de comptage du courant de charge v2, et comparaison avec v1 ;
- Si v2 > v1, mémorisation de l'instant t2 et de la date du jour comme dernière date M de chargement dudit dispositif de stockage externe d'énergie, sinon arrêt de l'alimentation du connecteur électrique (8) sans mémorisation de date de chargement ;
- Contrôle en boucle de la valeur du courant de charge, et dès qu'il diminue, arrêt de l'alimentation du connecteur électrique (8) et mémorisation de l'instant t3 d'arrêt ;
- Si le courant de charge ne diminue pas après une période de durée prédéterminée débutant à l'instant t2, arrêt de l'alimentation du connecteur électrique (8), et mémorisation de l'instant t3 d'arrêt.

18. Procédé de gestion de l'énergie selon la revendication précédente, **caractérisé en ce que** les dates et instants sont mémorisés par le système de pilotage et envoyés via les moyens de télécommunication électroniques.

19. Procédé de gestion à distance d'au moins un dispositif (1) selon les revendications 1 à 12 fonctionnant selon un procédé de gestion dudit dispositif (1) selon les revendications 13 à 18, **caractérisé en ce que** le(s) dispositif(s) (est) sont relié(s) via les moyens de télécommunication électroniques à un poste central auquel sont envoyés les paramètres de fonctionnement ainsi que les dates et instants mémorisés par le système de pilotage et à partir duquel les valeurs des paramètres de fonctionnement du dispositif (1) peuvent être re-paramétrer.

## Patentansprüche

1. Autonome und bewegliche Vorrichtung (1) zum Erzeugen, Speichern und Verteilen elektrischer Energie, umfassend Mittel zum Erzeugen elektrischer Energie (2), vorzugsweise Photovoltaikmodule (20), die auf mindestens einem Trägerelement (3) ruhen, beispielsweise einem standardisierten Seecontainer (31, 32), wobei letzterer Mittel zum internen Speichern (6) der durch die Erzeugungsmittel (2) erzeugten elektrischen Energie enthält, wobei das Trägerelement (3) auch Mittel zum Umwandeln der von den Erzeugungsmitteln (2) stammenden Signale in Signale enthält, die geeignet sind, Energiespeichermittel zu versorgen, mindestens einen elektrischen Verbinder (8) zum Anschluss externer Energiespeichervorrichtungen, wobei das Trägerelement (3) auch ein Steuerungssystem integriert, umfassend Mittel zum Verwalten des Speicherns und Verteilens der durch die Erzeugungsmittel (2) erzeugten Energie, die mit Sensoren zum Messen von Betriebsparametern verknüpft sind, die eine Vielzahl von Elementen der Vorrichtung (1) ausstatten, und elektronische Telekommunikationsmittel, **dadurch gekennzeichnet, dass** die externen Energiespeichervorrichtungen bewegliche Batterien sind, die einen integralen Bestandteil der Vorrichtung (1) bilden und jeweils eine Kennung aufweisen, die durch ein Identifikationsmittel erkannt wird, das das Trägerelement (3) aufweist, wobei das Identifikationsmittel mit dem Steuerungssystem verbunden ist, das die Versorgung der beweglichen Batterie zulässt oder nicht zulässt, und Anzeigemittel umfasst, wobei die beweglichen Batterien, die einen integralen Bestandteil der Vorrichtung (1) bilden, die einzigen Geräte sind, die fähig sind, durch den mindestens einen elektrischen Verbinder (8), den die Vorrichtung (1) aufweist, aufgeladen zu werden.

2. Vorrichtung (1) nach dem vorstehenden Anspruch,
**dadurch gekennzeichnet, dass** jede der beweglichen Batterien, die einen integralen Bestandteil der Vorrichtung (1) bilden, jeweils spezifische Mittel zum Anschluss an den mindestens einen elektrischen Verbinder (8) aufweist, wobei die beweglichen Batterien speziell dafür ausgelegt sind, die einzigen Geräte zu sein, die fähig sind, mit dem mindestens einen elektrischen Verbinder (8), den die Vorrichtung (1) aufweist, verbunden zu werden.

3. Vorrichtung (1) nach Anspruch 1 oder 2, **dadurch gekennzeichnet, dass** jeder der elektrischen Verbinder (8) mit mindestens einer Unverwechselbarkeitseinrichtung ausgestattet ist, die jede Verbindung anderer elektrischer Geräte als der beweglichen Batterien, die einen integralen Bestandteil der Vorrichtung (1) bilden, verhindert.

4. Vorrichtung (1) nach einem der vorstehenden Ansprüche,
**dadurch gekennzeichnet, dass** das Steuerungssystem mindestens einen Server umfasst, der einerseits eine Vielzahl von Mikrocontrollern, die Mittel zum Öffnen/Schließen, bestehend aus Relais, mindestens elektrischen Leitungen, die jedem elektrischen Verbinder (8) zugeordnet sind, betätigen, und andererseits mindestens einen Lade- und Entladeregulierapparat (10) für die internen Speichermittel (6) überwacht.

5. Vorrichtung (1) nach einem der vorstehenden Ansprüche,
**dadurch gekennzeichnet, dass** die Signalumwandlungsmittel aus mindestens einem Wechselrichter (7), der stromabwärtig von den Erzeugungsmitteln (2) und stromaufwärtig von den elektrischen Verbindern (8) angeschlossen ist, und mindestens einem Laderegulierapparat (10), der zwischen den Wechselrichtern der Erzeugungsmittel (2) und den internen Speichermitteln (6) angeschlossen ist, bestehen.

6. Vorrichtung (1) nach Anspruch 4, **dadurch gekennzeichnet, dass** auf jeder elektrischen Leitung stromabwärtig von den Signalumwandlungsmitteln mindestens ein Zähler stromaufwärtig von einem Relais angeschlossen ist, wobei ein Leistungsschalter zwischen ihnen verbunden ist.

7. Vorrichtung (1) nach einem der vorstehenden Ansprüche,
**dadurch gekennzeichnet, dass** das Trägerelement (3) auch elektrische Leitungen enthält, die mindestens ein Kühlgerät (9) und/oder mindestens ein Belüftungsmittel und/oder mindestens eine Beleuchtung versorgen.

8. Vorrichtung (1) nach einem der vorstehenden Ansprüche,
**dadurch gekennzeichnet, dass** die elektronischen Telekommunikationsmittel mindestens einen WEB-Server, einen WIFI-Router und einen Internet-Router aufweisen.

9. Vorrichtung (1) nach einem der vorstehenden Ansprüche,
**dadurch gekennzeichnet, dass** das Steuerungssystem und seine Mittel zum Verwalten der Energiespeicherung und -verteilung Spannungs-, Strom- und Energiesensoren umfassen.

10. Vorrichtung (1) nach einem der vorstehenden Ansprüche,
**dadurch gekennzeichnet, dass** sie als Trägerelemente (3) zwei Container (31, 32) aufweist, an denen eine Struktur (4) zum Halten und Befestigen einer Vielzahl von Photovoltaikmodulen (20) befestigt ist, wobei die elektrischen Verbinder (8) an den Außenseiten von mindestens einem der zwei Container (31, 32) positioniert sind.

11. Vorrichtung (1) nach Anspruch 10, **dadurch gekennzeichnet, dass** die Struktur (4) zum Halten und Befestigen einer Vielzahl von
Photovoltaikmodulen (20) in Form eines geneigten Metallgerüsts (41) vorliegt, das aus einer Vielzahl von Pfetten (42) gebildet ist, die an Querträgern befestigt sind, die ihrerseits fest mit der Oberseite jedes Containers (31, 32) über zwei Endpfosten (5a, 5b) mit verschiedenen Abmessungen, insbesondere Höhen, verbunden sind, wobei die Pfosten an den vier Ecken jedes der Container (31, 32) positioniert sind, wobei die Struktur (4) vier lange Endpfosten (5a), zwei für einen Container (31) und zwei für einen Container (32), und ebenso vier kurze Endpfosten (5b) aufweist.

12. Vorrichtung (1) nach einem der vorstehenden Ansprüche,
**dadurch gekennzeichnet, dass** die elektrischen Verbinder (8) Kennzeichnungsmittel aufweisen, die aus einer oder mehreren LED(s) bestehen, die durch das Steuerungssystem verwaltet wird/werden.

13. Verfahren zum Verwalten der Energie, die durch eine autonome und bewegliche Vorrichtung (1) zum Erzeugen, Speichern und Verteilen von elektrischer Energie nach den Ansprüchen 4, 7 und 9 bis 12 erzeugt wird, **gekennzeichnet durch** die folgenden Schritte:
- Erstellen eines ersten Schwellenwerts S1 für das in den internen Speichermitteln (6) verfügbare Energieniveau, das für den Betrieb der Vorrichtung (1) erforderlich ist;
- Erstellen eines zweiten Schwellenwerts S2 für das in den internen Speichermitteln (6) verfügbare Energieniveau, sodass S2 > S1 ist;
- falls der erste Schwellenwert S1 unterschritten wird, Trennen der elektronischen Telekommunikationsmittel während eines ersten Zeitraums d1 einer vorbestimmten Dauer, dann Überwachen des in den internen Speichermitteln (6) verfügbaren Energieniveaus am Ende des ersten Zeitraums d1, und erneutes Verbinden der elektronischen Telekommunikationsmittel, wenn das Niveau höher als der zweite Wert S2 ist;
- wenn das verfügbare Energieniveau immer noch kleiner als der zweite Wert S2 ist, Erfassen der Anzahl der elektrischen Verbinder (8), die sich in der aktiven Phase der Versorgung einer Ladung befinden, und Berechnen ihrer Versorgungsdauer tₐ;
- Trennen der n₁ elektrischen Verbinder (8), die die höchsten Versorgungsdauern tₐ während eines zweiten Zeitraums einer vorbestimmten Dauer d2 vorweisen, dann Regeln des in den internen Speichermitteln (6) verfügbaren Energieniveaus am Ende des zweiten Zeitraums d2 und, wenn der Wert S2 nicht erreicht wird, Wiederaufnahme der Trennungsphase, indem die Anzahl der getrennten elektrischen Verbinder (8) um n₂ erhöht wird, wobei die elektronischen Telekommunikationsmittel getrennt bleiben;
- erneutes Verbinden der getrennten elektrischen Verbinder (8) und der elektronischen Telekommunikationsmittel, sobald das in den internen Speichermitteln (6) verfügbare Energieniveau höher als oder gleich dem zweiten Wert S2 ist;
- wenn sich keiner der elektrischen Verbinder (8) oder keiner mehr in der aktiven Phase der Versorgung einer Ladung befindet, Überwachen der Versorgungsleitung des Kühlgeräts (9) und Trennen der Leitung, wenn das Kühlgerät versorgt wird, während eines dritten Zeitraums einer vorbestimmten Dauer d3, dann Überwachen des in den internen Speichermitteln (6) verfügbaren Energieniveaus am Ende des dritten Zeitraums d3, und erneutes Verbinden des Kühlgeräts (9), der Gesamtheit der elektrischen Verbinder (8) und der elektronischen Telekommunikationsmittel, sobald das Niveau höher als der zweite Wert S2 ist;
- wenn das verfügbare Energieniveau immer noch kleiner als der zweite Wert S2 ist, Senden einer Energiemangelwarnung und Trennen der Sensoren mit Ausnahme der Energiesensoren der internen Speichermittel (6), dann Überwachen des in den internen Speichermitteln (6) verfügbaren Energieniveaus und erneutes Verbinden der getrennten Elemente, sobald das Energieniveau höher als der zweite Wert S2 ist.
- falls in den internen Speichermitteln (6) eine Nullenergie erfasst wird und wenn die Photovoltaikerzeugung gleich null ist, starten der Server und die verschiedenen Komponenten der Vorrichtung (1) neu, sobald sie wieder mit Energie versorgt werden.

14. Energieverwaltungsverfahren nach dem vorstehenden Anspruch, **dadurch gekennzeichnet, dass** die Werte S1 und S2 gemäß Zeitabschnitten variabel sind, die in einem Zeitraum definiert sind, der einem Tag entspricht.

15. Energieverwaltungsverfahren nach einem der Ansprüche 13 oder 14, **dadurch gekennzeichnet, dass** :
- der erste Schwellenwert S1 zwischen 1 und 8 kWh liegt;
- der zweite Wert S2 höher als oder gleich S1 + 1 kWh ist und zwischen 2 und 10 kwh liegt;
- die erste vorbestimmte Dauer d1 zwischen 2 min und 30 min liegt;
- die zweite vorbestimmte Dauer d2 zwischen 2 min und 30 min liegt;
- die dritte vorbestimmte Dauer d3 zwischen 2 min und 30 min liegt.

16. Energieverwaltungsverfahren nach einem der Ansprüche 13 bis 15, angewendet auf eine Vorrichtung nach einem der Ansprüche 1 bis 12, zum Laden der externen Energiespeichermittel **gekennzeichnet durch:**
- Lesen der Kennung einer externen Energiespeichervorrichtung durch die Identifikationsmittel und Feststellen des Zeitpunkts t1 und des Datums T des Lesens;
- Überwachen des letzten Ladedatums M der externen Energiespeichervorrichtung durch das Steuerungssystem;
- Berechnen der Dauer D = T - M und Vergleichen von D mit einer vorbestimmten Dauer L, die zwischen zwei Ladungen vorgeschrieben ist;
- Verweigern des Ladens, wenn D verschieden von L ist, und Senden, durch das Steuerungssystem, und Visualisieren auf den Anzeigemitteln einer Nachricht, die das nächste zulässige Datum angibt;
- andernfalls führt das Steuerungssystem einen Speichervorgang des Zeitpunkts der Identifizierung und dann das Zuweisen und das Visualisieren des zugeordneten elektrischen Verbinders (8) durch Aktivieren der Kennzeichnungsmittel des Verbinders (8) durch.

17. Energieverwaltungsverfahren nach dem vorstehenden Anspruch, **gekennzeichnet durch:**
- Identifizieren eines Zählers, der dem zugewiesenen elektrischen Verbinder (8) entspricht, und Speichern des Zählwerts v1 für den Ladestrom und des Zeitpunkts t1;
- Regeln, während einer vorbestimmten Dauer zwischen 1 min und 4 min, des Zählwerts v2 für den Ladestrom und Vergleichen mit v1;
- wenn v2 > v1, Speichern des Zeitpunkts t2 und des Tagesdatums als letztes Ladedatum M der externen Energiespeichervorrichtung, andernfalls Stoppen der Versorgung des elektrischen Verbinders (8) ohne Speicherung des Ladedatums;
- Regeln des Wertes des Ladestroms und, sobald er abnimmt, Stoppen der Versorgung des elektrischen Verbinders (8) und Speichern des Zeitpunkts t3 des Stoppens;
- wenn der Ladestrom nach einem Zeitraum von vorbestimmter Dauer, der zu dem Zeitpunkt t2 beginnt, nicht abnimmt, Stoppen der Versorgung des elektrischen Verbinders (8) und Speichern des Zeitpunkts t3 des Stoppens.

18. Energieverwaltungsverfahren nach dem vorstehenden Anspruch, **dadurch gekennzeichnet, dass** die Daten und Zeitpunkte durch das Steuerungssystem gespeichert und über die elektronischen Telekommunikationsmittel gesendet werden.

19. Verfahren zum Fernverwalten mindestens einer Vorrichtung (1) nach den Ansprüchen 1 bis 12, das gemäß einem Verfahren zum Verwalten der Vorrichtung (1) nach den Ansprüchen 13 bis 18 betrieben wird,
**dadurch gekennzeichnet, dass** die Vorrichtung(en) über elektronische Telekommunikationsmittel mit einer Zentralstation verbunden ist/sind, an die die Betriebsparameter sowie die durch das Steuerungssystem gespeicherten Daten und Zeitpunkte gesendet werden und von der aus die Werte der Betriebsparameter der Vorrichtung (1) neu parametriert werden können.

## Claims

1. Autonomous and movable device (1) for the generation, storage and distribution of electrical power, comprising means for generating electrical power (2), preferably photovoltaic panels (20), resting on at least one supporting element (3), for example a standardized shipping container (31, 32), the latter enclosing means for internal storage (6) of the electrical power generated by said generation means (2), said supporting element (3) also enclosing means for converting the signals from the generation means (2) into signals capable of supplying power to the electrical power storage means, at least one electrical connector (8) for connecting external electrical power storage devices, said supporting element (3) also incorporating a controlling system comprising means for managing the storage and distribution of the electrical power generated by said generation means (2) connected to sensors for measuring the operating parameters, which a plurality of elements of the device (1) are provided with, and electronic telecommunication means, **characterized in that** said external electrical power storage devices are movable batteries forming an integral part of the device (1), each of the movable batteries includes an identifier recognized by an identification means that supporting element (3) comprises, said identification means being connected to the controlling system, which permits or not the power supply to said movable battery, and including display means, said movable batteries forming an integral part of the device (1) being the only loads capable of being recharged by said at least one electrical connector (8) that said device (1) comprises.

2. Device (1) according to the preceding claim **characterized in that** each of the movable batteries forming an integral part of the device (1) comprises connection means specific to said at least one electrical connector (8), said movable batteries being specially designed to be the only devices that can be connected to said at least one electrical connector (8) that said device (1) comprises.

3. Device (1) according to claim 1 or claim 2 **characterized in that** each of the electrical connector (8) is equipped with at least one coded pin impeding any connection of electrical appliances other than said movable batteries forming an integral part of the device (1).

4. Device (1) according to any one of the preceding claims, **characterized in that** the controlling system comprises at least one server controlling, on the one hand, a plurality of microcontrollers controlling opening/closing means, consisting in relays, at least for the electrical lines associated with each electrical connector (8) and, on the other hand, at least one charge and discharge regulator (10) for the internal storage means (6).

5. Device (1) according to any one of the preceding claims, **characterized in that** the signal converting means consist of at least one inverter (7) connected downstream of said generation means (2) and upstream of the electrical connectors (8) and at least one charge regulator (10) connected between said inverters of the generation means (2) and the internal storage means (6).

6. Device (1) according to claim 4, **characterized in that**, on each electrical line, downstream of the signal converting means, at least one meter is connected upstream of a relay, a circuit breaker being connected between them.

7. Device (1) according to any one of the preceding claims, **characterized in that** said supporting element (3) also encloses electrical lines supplying power to at least one refrigerator (9) and/or at least one ventilation means and/or at least one lighting.

8. Device (1) according to any one of the preceding claims, **characterized in that** the electronic communication means include at least a WEB server, a WIFI router and an internet router.

9. Device (1) according to any one of the preceding claims, **characterized in that** the controlling system and its means for managing the storage and distribution of electrical power comprise voltage, current, and energy sensors.

10. Device (1) according to any one of the preceding claims, **characterized in that** it includes, as supporting elements (3), two containers (31, 32) to which is fixed a structure (4) for holding and fastening a plurality of photovoltaic panels (20), said electrical connectors (8) being positioned on the outer faces of at least one of the two containers (31, 32).

11. Device (1) according to claim 10 **characterized in that** said structure (4) for holding and fastening a plurality of photovoltaic panels (20) is in the form of an inclined metal frame (41), formed of a plurality of purlins (42) fastened to cross members that are in turn secured to the upper face of each container (31, 32) via two end posts (5a, 5b) having different dimensions, in particular different heights, said posts being positioned at the four corners of each of the containers (31, 32), said structure (4) comprising four long end posts (5a), two for a container (31) and two for a container (32), and likewise four short end posts (5b).

12. Device (1) according to any one of the preceding claims, **characterized in that** the electrical connectors (8) include detection means, consisting in one or more LED(s), managed by the controlling system.

13. Method for managing the electrical energy generated by an autonomous and movable device (1) for the generation, storage and distribution of electrical power according to claims 4, 7 and 9 to 12, **characterized by** the following steps:
- setting a first threshold value S1 for the level of power available in the internal storage means (6) necessary for the operation of the device (1) ;
- setting a second value S2 for the level of power available in the internal storage means (6) so that S2 > S1 ;
- when dropping below said first threshold value S1, disconnecting the electronic telecommunication means for a first predetermined period of time d1, then closed-loop controlling the level of power available in the internal storage means (6) at the end of said first period of time d1, and reconnecting the electronic telecommunication means if said level is higher than the second value S2 ;
- if said available level of power is still lower than the second value S2, detecting the number of electrical connectors (8) in the active phase of supplying a load, and calculating their supply time tₐ ;
- disconnecting the n₁ electrical connectors (8) having the highest supply times tₐ for a second predetermined period of time d2, then closed-loop controlling the level of power available in the internal storage means (6) at the end of said second period of time d2 and, if the value S2 is not reached, resuming the disconnection phase while incrementing by n₂ the number of disconnected electrical connectors (8), while keeping the electronic communication means disconnected ;
- reconnecting the disconnected electrical connectors (8) and the electronic telecommunication means as soon as said level of power available in the internal storage means (6) is higher than or equal to the second value S2 ;
- if no electrical connector (8) is any longer in the active phase of supplying a load, controlling the supply line of the refrigerator (9) and disconnecting said line if the refrigerator is powered, for a third predetermined period of time d3, then closed-loop controlling the level of power available in the internal storage means (6) at the end of said third period of time d3, and reconnecting the refrigerator (9), all the electrical connectors (8) and the electronic telecommunication means as soon as said level is higher than the second value S2 ;
- if said level of power available is still lower than the second value S2, sending a warning of insufficient power and disconnecting the sensors, except the power sensors of the internal storage means (6), then closed-loop controlling the level of power available in said internal storage means (6) and reconnecting the disconnected elements as soon as said level of power is higher than the second value S2 ;
- in case of detection of a zero power in the internal storage means (6) and if the photovoltaic generation is zero, the server and the various organs of the device (1) restart as soon as they are anew supplied with electrical power.

14. Method for managing the electrical energy according to the preceding claim, **characterized in that** the values S 1 and S2 are varying according to defined time slots in a time period corresponding to one day.

15. Method for managing the electrical energy according to one of claims 13 or 14, **characterized in that**:
- the first threshold value S 1 varies between 1 and 8 kWh ;
- the second value S2 is higher than or equal to S 1 + 1 kWh and varies between 2 and 10 kWh ;
- the first predetermined period of time d1 varies between 2 minutes and 30 minutes ;
- the second predetermined period of time d2 varies between 2 minutes and 30 minutes ;
- the third predetermined period of time d3 varies between 2 minutes and 30 minutes.

16. Method for managing the electrical energy according to one of claims 13 to 15, applied to a device according to any one of claims 1 to 12, **characterized in that**, for charging the external power storage means:
- reading, by the identification means, the identifier of an external electrical power storage device and recording the time t1 and the date T of reading ;
- controlling, by the controlling system, the last date M of charging of said external electrical power storage device ;
- calculating the period of time D = T - M and comparing D with a predetermined period of time L imposed between two charges ;
- refusing the charging if D is different from L, and sending, by the controlling system, and displaying on the display means, a message indicating the next authorized date ;
- otherwise, the controlling system performs a storing of the time of identification, then the assignment and the display of the electrical connector (8) assigned through activation of the detection means of said connector (8).

17. Method for managing the electrical energy according to the preceding claim, **characterized in that**:
- identifying a meter corresponding to the assigned electrical connector (8) and storing the count value v1 of the charge current and the time t1 ;
- closed-loop controlling for a predetermined time between 1 min and 4 min the count value of the charge current v2, and comparing with v1 ;
- if v2 > v1, storing the time t2 and the date of the day as the last date M of charging of said external electrical power storage device, otherwise stopping the power supply to the electrical connector (8) without storing the date of charging ;
- closed-loop controlling the value of the charge current and, as soon as it decreases, stopping the power supply to the electrical connector (8) and storing the time t3 of stopping ;
- if the charge current does not decrease after a predetermined period of time starting at time t2, stopping the power supply to the electrical connector (8), and storing the time t3 of stopping.

18. Method for managing the electrical energy according to the preceding claim, **characterized in that** the dates and times are stored by the controlling system and sent via the electronic telecommunication means.

19. Method for remotely managing at least one device (1) according to claims 1 to 12 operating according to a method for managing said device (1) according to claims 13 to 18, **characterized in that** the device or devices is or are connected via the electronic telecommunication means to a central station, which the operating parameters as well as the dates and times stored by the controlling system are sent to, and from which the values of the operating parameters of the device (1) can be re-parameterized.
